# EUROPÄISCHE PATENTSCHRIFT

(11) **EP 3 854 949 B1**
(45) Veröffentlichungstag und Bekanntmachung des Hinweises auf die Patenterteilung: **05.07.2023**
(21) Anmeldenummer: 21152629.8
(22) Anmeldetag: 20.01.2021
(51) Int. Cl.: E03C 1/04, F16K 31/60

(54) **SANITÄRARMATUR MIT STUFENWEISER EINSTELLBARKEIT DES DURCHFLUSSES**
SANITARY FITTING WITH FLOW THAT CAN BE ADJUSTED IN STAGES
ROBINETTERIE SANITAIRE À RÉGLAGE ÉTAGÉ DU DÉBIT

(30) Priorität: 24.01.2020 DE 102020101696
(43) Veröffentlichungstag der Anmeldung: 28.07.2021
(73) Patentinhaber: Grohe AG, 58653 Hemer (DE)
(72) Erfinder: Langer, Heiko, 59174 Kamen (DE); Leutner, Markus, 58802 Balve (DE)

(56) Entgegenhaltungen:
- DE-A1- 3 444 123
- DE-A1- 19 753 950
- JP-A- 2008 248 540
- US-A- 5 836 333

## Beschreibung

Die Erfindung betrifft eine Sanitärarmatur gemäß Anspruch 1, sowie eine Verwendung der Sanitärarmatur gemäß Anspruch 9.

Sanitärarmaturen dienen insbesondere der bedarfsgerechten Bereitstellung von Wasser, wie etwa Kaltwasser, Warmwasser und/oder Mischwasser an einem Waschbecken, einem Spülbecken, einer Dusche oder einer Badewanne. Zur bedarfsgerechten Bereitstellung von Wasser kann die Sanitärarmatur beispielsweise ein Durchflussventil zur Einstellung der Durchflussmenge an Wasser und eine Thermostatventil zur Einstellung der Wassertemperatur aufweisen. Zum Beispiel können dabei Kaltwasser und Heißwasser im Bereich des Thermostatventils zu Mischwasser gemischt werden. Solche Sanitärarmaturen können auch als Thermostatbatterie bezeichnet werden. Die Erfindung kann beispielsweise bei länglichen, zumindest abschnittweise zylinderförmigen Sanitärarmaturen zum Einsatz kommen, bei denen das Durchflussventil und das Thermostatventil in einander gegenüberliegenden und voneinander abgewandten Endbereichen der Sanitärarmatur angeordnet sind. In diesem Zusammenhang befasst sich die Erfindung insbesondere mit der Ausgestaltung des Durchflussventils. Die Erfindung kann insbesondere bei sanitären 3-Loch-Waschtischarmaturen und/oder sanitären 3-Loch-Wandarmaturen zur Anwendung kommen.

Bekannte Durchflussventile ermöglichen in der Regel ein stufenloses Einstellen des Volumenstroms durch die Sanitärarmatur. Für viele Benutzer ist jedoch eine exakte Justierung des Volumenstroms mit solchen Durchflussventilen schwierig. Zudem vermissen viele Benutzer eine Rückkopplung der Sanitärarmatur, die dem Benutzer eine Information über die vorgenommene Volumenstromänderung bietet Solche Sanitärarmaturen gemäß dem Stand der Technik sind in DE19753950A1, JP2008248540A, DE3444123A1, US5836333A offenbart.

Hiervon ausgehend ist es Aufgabe der vorliegenden Erfindung, die mit Bezug auf den Stand der Technik geschilderten Probleme zumindest teilweise zu lösen. Insbesondere sollen eine Sanitärarmatur, ein Rastsystem und eine Verwendung angegeben werden, die eine bessere Justierung des Volumenstroms durch die Sanitärarmatur ermöglichen. Zudem soll dem Benutzer insbesondere ein wertigeres Bediengefühl vermittelt werden.

Diese Aufgaben werden gelöst durch die Merkmale des Anspruchs 1. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, mit einer Einstelleinrichtung zur Einstellung eines Durchflusses durch die Sanitärarmatur, einem Drehgriff zur manuellen Vorgabe des Durchflusses und einem Rastsystem, wobei die Einstelleinrichtung ein um eine Drehachse drehbares Stellelement umfasst, das drehfest mit dem Drehgriff verbunden ist, wobei das Rastsystem ein erstes Rastelement und ein dazu korrespondierendes zweites Rastelement umfasst, die derart zusammenwirken, dass der Drehgriff während einer Drehung in einer Umfangsrichtung um die Drehachse und während einer Drehung entgegen der Umfangsrichtung um die Drehachse jeweils in einer Vielzahl von definierten Drehstellungen einrasten kann, und wobei zumindest in oder an dem ersten Rastelement oder dem zweite Rastelement ein Federelement zum Bewirken einer axialen Anpresskraft zwischen den Rastelementen integral gebildet ist.

Bei der Einstelleinrichtung kann es sich um ein Seitenventil handeln. In diesem Zusammenhang kann es sich bei der Einstelleinrichtung um ein seitlich (im Wesentlichen horizontal) ausgerichtetes Durchflussmengenventil handeln. Es kann sich bei der Einstelleinrichtung (alternativ jedoch auch) um ein (im Wesentlichen) vertikal ausgerichtetes Durchflussmengenventil handeln. Der Drehgriff kann beispielsweise in der Form eines Hebels oder eines Knaufs gebildet sein. Das Stellelement (Ventilsteller) kann zum Beispiel über mindestens einen (Riefen-)Adapter und/oder eine Schraubverbindung mit dem Drehgriff drehfest verbunden werden. Die Einstelleinrichtung kann zur Einstellung eines Kaltwasser-, Warmwasser- und/oder Mischwasser-Durchflusses durch die Sanitärarmatur eingerichtet sein. In diesem Zusammenhang kann die Einstelleinrichtung gegebenenfalls auch zwei Durchflussventile (für Kaltwasser und für Warmwasser) aufweisen bzw. die Sanitärarmatur zwei Einstelleinrichtungen (mit jeweils einem Durchflussventil) aufweisen (sog. 3-Loch-Armatur).

Bei dem Rastsystem handelt es sich in der Regel um ein sogenanntes axiales Rastsystem. Dabei können die Rastelement zum Rasteingriff in axialer Richtung aufeinander zu bewegt werden. Weiterhin kann zumindest ein Teil des ersten Rastelements radial innenliegend zu mindestens einem Teil des zweiten Rastelements angeordnet sein. Dabei kann das zweite Rastelement das erste Rastelement in radialer Richtung zumindest teilweise bedecken. Die Begriffe "axial" und "radial" beziehen sich auf die Drehachse. Das zweite Rastelement kann beispielsweise in zumindest einem axialen Abschnitt eine sich achsparallel zu der Drehachse erstreckende, ringförmige Außenwand aufweisen, innerhalb derer sich zumindest ein Teil des ersten Rastelements erstrecken kann.

Das erste Rastelement kann beispielhaft in der Art eines Rohrstücks und/oder einer Hülse geformt sein. Weiterhin kann das erste Rastelement achsparallel zu der Drehachse ausgerichtet sein. Das zweite Rastelement kann beispielsweise in der Art eines (Riefen-)Adapters bzw. mit einem (Riefen-)Adapter gebildet sein. Dieser Adapter kann etwa mit entsprechenden Verzahnungen dazu eingerichtet sein, das Stellelement der Einstelleinrichtung (direkt oder indirekt, etwa über einen weiteren Adapter) mit dem Drehgriff drehfest zu verbinden. Das zweite Rastelement kann im wesentlichen rotationssymmetrisch um die Drehachse gebildet und/oder (ebenfalls) achsparallel zu der Drehachse ausgerichtet sein.

Die Rastelemente können derart zusammenwirken, dass der Drehgriff sowohl während einer Drehung in einer Umfangsrichtung um die Drehachse als auch während einer Drehung entgegen der Umfangsrichtung um die Drehachse in einer Vielzahl von definierten, in Umfangsrichtung aufeinander folgenden Drehstellungen einrasten kann bzw. (tatsächlich dann in eine konkrete) einrastet. Die Drehstellungen können über den Umfang (gleichmäßig) verteilt sein. Die Drehstellungen und/oder der Abstand in Umfangsrichtung zwischen aufeinanderfolgenden Drehstellungen ist in der Regel durch die Geometrie bzw. die Rastkonturen der Rastelemente definiert.

Das Federelement kann beispielsweise ein Bestandteil des ersten Rastelements oder des zweiten Rastelements sein. Es kann auch vorgesehen sein, dass beide Rastelemente jeweils ein Federelement aufweisen. Vorzugsweise ist das Federelement ein Bestandteil des ersten Rastelements. Das Federelement kann integral bzw. einstückig mit einem bzw. dem restlichen Körper des betreffenden Rastelements gebildet sein. Beispielsweise kann das Federelement mit einem elastischen (axialen) Abschnitt des Körpers des betreffenden Rastelements gebildet sein. Beispielsweise kann der Körper in diesem Abschnitt mit einem elastischeren Material gebildet sein und/oder Ausnehmungen aufweisen, welche die Steifigkeit des Materials reduzieren können.

Das Federelement kann eine axialen Anpresskraft zwischen den Rastelementen bewirken. Dabei kann die Anpresskraft auch eine radiale Komponente aufweisen, sie weist jedoch zumindest auch eine axiale Komponente auf. Das Federelement kann beispielsweise bewirken, dass ein Körper des betreffenden Rastelements in axialer Richtung komprimiert werden und insbesondere (immer) wieder selbstständig in seine Ausgangslage zurückfedern bzw. expandieren kann.

In der Ausganslage kann das Federelement derart vorkomprimiert sein, dass (stets) eine (gewisse) Vorspannung besteht. Beispielsweise kann das Komprimieren während eines Verlassens einer Drehstellung erfolgen, wohingegen das Zurückfedern bzw. Expandieren während eines Einrastens in eine (unmittelbar) darauffolgende Drehstellung erfolgen kann.

Nach einer vorteilhaften Ausgestaltung wird vorgeschlagen, dass die Rastelemente derart zusammenwirken, dass der Drehgriff während einer maximalen Öffnungsdrehung und während einer maximalen Schließdrehung jeweils in mindestens drei definierten Drehstellungen einrasten kann. Weiterhin können mindestens fünf oder mindestens zehn definierte Drehstellungen vorgesehen sein. Je höher die Anzahl der Drehstellungen ist, desto kleinstufiger kann der Volumenstrom durch die Sanitärarmatur justierbar sein. Die Anzahl der Drehstellungen kann beispielsweise von einer Anzahl an Erhebungen der Rastkonturen abhängig sein. Weiterhin kann die Anzahl der Drehstellungen von einem maximalen Verdrehwinkel des Drehgriffs abhängig sein. So können zum Beispiel bei einem maximalen Verdrehwinkel von 90° mindestens acht definierte Drehstellungen vorgesehen sein. Bei einem maximalen Verdrehwinkel von 180° können beispielhaft mindestens sechzehn definierte Drehstellungen vorgesehen sein.

Nach einer weiteren vorteilhaften Ausgestaltung wird vorgeschlagen, dass das erste Rastelement drehfest mit einem Gehäuseelement (Oberteil) der Einstelleinrichtung verbunden ist und das zweite Rastelement drehfest mit dem Drehgriff verbunden ist. Das erste Rastelement kann direkt oder indirekt (zum Beispiel über ein Armaturengehäuse) drehfest mit dem Gehäuseelement der Einstelleinrichtung verbunden sein. Das zweite Rastelement kann direkt und/oder indirekt (zum Beispiel über einen Adapter) drehtfest mit dem Drehgriff verbunden sein.

Nach einer weiteren vorteilhaften Ausgestaltung wird vorgeschlagen, dass das erste Rastelement mit einer Federhülse gebildet ist, die einen Hülsenkörper aufweist, in oder an dem das Federelement integral gebildet ist. Dies kann mit anderen Worten auch so beschrieben werden, dass das Federelement und der Hülsenkörper einstückig gebildet sind. Beispielsweise können in einem axialen Abschnitt des Hülsenkörpers Ausnehmungen zur Bildung des Federelements vorgesehen sein, die beispielsweise bewirken können, dass die Steifigkeit dieses Abschnitts in zumindest in oder hauptsächlich in axialer Richtung reduziert ist.

Nach einer weiteren vorteilhaften Ausgestaltung wird vorgeschlagen, dass zumindest das erste Rastelement eine erste, in Umfangsrichtung wellenförmige Rastkontur oder das zweite Rastelement eine zweite, in Umfangsrichtung wellenförmige Rastkontur aufweist. Vorzugsweise weisen das erste Rastelement eine erste, in Umfangsrichtung wellenförmige Rastkontur und das zweite Rastelement eine (dazu korrespondierende) zweite, in Umfangsrichtung wellenförmige Rastkontur auf. Die Rastkonturen können dabei Erhebungen bzw. Wellenberge aufweisen, die sich in axialer Richtung erheben bzw. von der (restlichen) Rastkontur weg erstrecken können. Insbesondere können (im eingerasteten Zustand) in einer zu der Drehachse orthogonalen Ebene alle Erhebungen (der ersten und der zweiten Rastkontur und/oder gleichzeitig) jeweils mit zwei (direkt) in Umfangsrichtung benachbarten Erhebungen der jeweils anderen Rastkontur kämmen und/oder im Eingriff sein.

Nach einer weiteren vorteilhaften Ausgestaltung wird vorgeschlagen, dass das erste Rastelement die erste, in Umfangsrichtung wellenförmige Rastkontur an einer hin zu dem zweiten Rastelement weisenden Stirnfläche des Hülsenkörpers aufweist. Somit kann das erste Rastelement in Richtung des zweiten Rastelements eine gewellte Stirnfläche aufweisen.

Nach einer weiteren vorteilhaften Ausgestaltung wird vorgeschlagen, dass das zweite Rastelement die zweite, in Umfangsrichtung wellenförmige Rastkontur an einer axialen Trennfläche zu dem ersten Rastelement aufweist. Die Trennfläche trennt dabei insbesondere das zweite Rastelement von dem ersten Rastelement.

Nach einer weiteren vorteilhaften Ausgestaltung wird vorgeschlagen, dass das erste Rastelement in einen in Umfangsrichtung umlaufenden Ringspalt des zweiten Rastelements hineinragt.

Der Ringspalt kann dazu an einer hin zu der Einstelleinrichtung Stirnseite offen sein. Weiterhin kann die zweite, in Umfangsrichtung wellenförmige Rastkontur in einem Grund des Ringspalts bzw. an der gegenüberliegenden, geschlossenen Stirnseite des Ringspalts gebildet sein.

Nach einem weiteren Aspekt wird ein Rastsystem in einer hier beschriebene Sanitärarmatur vorgeschlagen, aufweisend ein erstes Rastelement und ein dazu korrespondierendes zweites Rastelement, die derart zusammenwirken, dass der Drehgriff während einer Drehung in einer Umfangsrichtung um die Drehachse und während einer Drehung entgegen der Umfangsrichtung um die Drehachse jeweils in einer Vielzahl von definierten Drehstellungen einrasten kann, und wobei zumindest in oder an dem ersten Rastelement oder dem zweite Rastelement ein Federelement zum Bewirken einer Anpresskraft zwischen den Rastelementen integral gebildet ist. Nach einem weiteren Aspekt wird auch eine Verwendung eines hier beschriebenen Rastsystems zum Bereitstellen einer zumindest haptisch oder akustisch wahrnehmbaren, stufenweisen Einstellbarkeit des Durchflusses durch die Sanitärarmatur vorgeschlagen.

Die im Zusammenhang mit der Sanitärarmatur erörterten Details, Merkmale und vorteilhaften Ausgestaltungen können entsprechend auch bei dem hier vorgestellten Rastsystem und/oder der Verwendung auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in oder in Zusammenhang mit den Figuren erläuterten Sachverhalte zu extrahieren und mit anderen Bestandteilen und/oder Erkenntnissen aus anderen Figuren und/oder der vorliegenden Beschreibung zu kombinieren. Es zeigen beispielhaft und schematisch:
- Fig. 1:: eine hier beschriebene Sanitärarmatur in Schnittdarstellung,
- Fig. 2:: ein erstes Rastelement für die Sanitärarmatur aus Fig. 1 in perspektivischer Darstellung,
- Fig. 3:: ein zweites Rastelement für die Sanitärarmatur aus Fig. 1 in perspektivischer Darstellung, und
- Fig. 4:: die Sanitärarmatur aus Fig. 1 in Explosionsdarstellung.

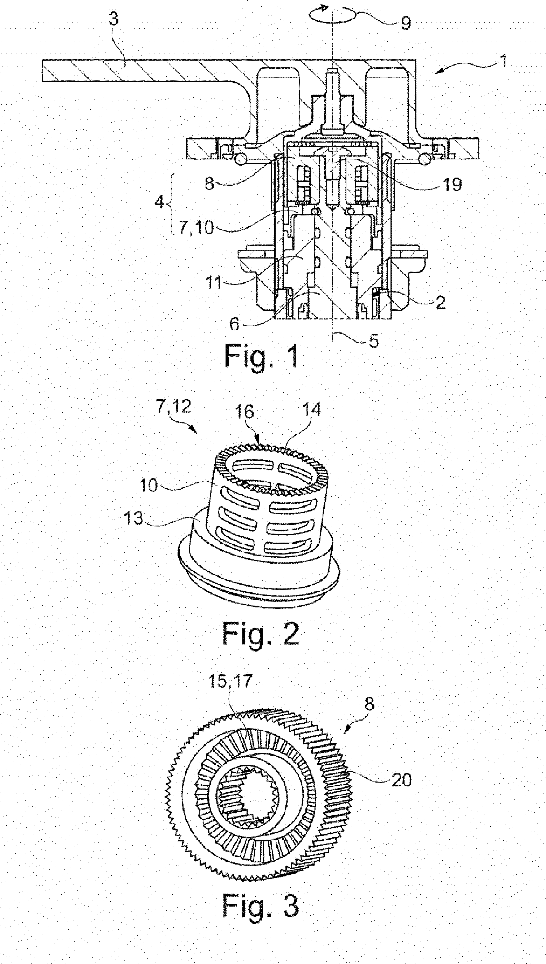

Fig. 1 zeigt beispielhaft und schematisch eine hier beschriebene Sanitärarmatur 1 in Schnittdarstellung. Die Sanitärarmatur 1 weist eine Einstelleinrichtung 2 zur Einstellung eines Durchflusses durch die Sanitärarmatur 1, einen Drehgriff 3 zur manuellen Vorgabe des Durchflusses und ein Rastsystem 4 auf. Die Einstelleinrichtung 2 weist ein um eine Drehachse 5 drehbares Stellelement 6 auf, das drehfest mit dem Drehgriff 3 verbunden ist. Das Rastsystem 4 weist ein erstes Rastelement 7 und ein dazu korrespondierendes zweites Rastelement 8 auf, die derart zusammenwirken, dass der Drehgriff 3 während einer Drehung in einer Umfangsrichtung 9 um die Drehachse 5 und während einer Drehung entgegen der Umfangsrichtung 9 um die Drehachse 5 jeweils in einer Vielzahl von definierten Drehstellungen einrasten kann. Zumindest in oder an dem ersten Rastelement 7 oder dem zweite Rastelement 8 ist ein Federelement 10 zum Bewirken einer axialen Anpresskraft zwischen den Rastelementen 7, 8 integral gebildet.

Bei der in Fig. 1 gezeigten Einstelleinrichtung 2 handelt es sich beispielhaft um ein sogenanntes Seitenventil der Sanitärarmatur 1. Dies kann mit anderen Worten auch so beschrieben werden, dass die Drehachse 5 im montierten Zustand der Sanitärarmatur 1 im Wesentlichen horizontal ausgerichtet ist. Bei der in Fig. 1 gezeigten Sanitärarmatur 1 können die Rastelemente 7, 8 derart zusammenwirken, dass der Drehgriff 3 während einer maximalen Öffnungsdrehung und während einer maximalen Schließdrehung jeweils in mindestens drei definierten Drehstellungen einrasten kann.

Fig. 2 zeigt beispielhaft und schematisch ein erstes Rastelement für die Sanitärarmatur aus Fig. 1 in perspektivischer Darstellung. Fig. 3 zeigt beispielhaft und schematisch ein zweites Rastelement für die Sanitärarmatur aus Fig. 1 in perspektivischer Darstellung. Die Figuren 2 und 3 veranschaulichen somit ein Rastsystem 4 für eine die Sanitärarmatur 1 aus Fig. 1, aufweisend ein erstes Rastelement 7 (Fig. 2) und ein dazu korrespondierendes zweites Rastelement 8 (Fig. 3), die derart zusammenwirken, dass der Drehgriff 3 während einer Drehung in einer Umfangsrichtung 9 um die Drehachse 5 und während einer Drehung entgegen der Umfangsrichtung 9 um die Drehachse 5 jeweils in einer Vielzahl von definierten Drehstellungen einrasten kann, und wobei zumindest in oder an dem ersten Rastelement 7 oder dem zweite Rastelement 8 ein Federelement 10 zum Bewirken einer axialen Anpresskraft zwischen den Rastelementen 7, 8 integral gebildet ist.

In Fig. 2 ist weiterhin gezeigt, dass das erste Rastelement 7 mit einer Federhülse 12 gebildet sein kann, die einen Hülsenkörper 13 aufweist, in oder an dem das Federelement 10 integral gebildet sein kann. Beispielhaft ist das Federelement 10 gemäß der Darstellung nach Fig. 2 in dem Hülsenkörper 13 und integral mit diesem gebildet. Weiterhin ist in Fig. 2 zu erkennen, dass das erste Rastelement 7 eine erste, in Umfangsrichtung 9 wellenförmige Rastkontur 14 aufweisen kann. In diesem Zusammenhang ist in Fig. 2 auch gezeigt, dass das erste Rastelement 7 die erste, in Umfangsrichtung 9 wellenförmige Rastkontur 14 beispielsweise an einer hin zu dem zweiten Rastelement 8 weisenden Stirnfläche 16 des Hülsenkörpers 13 aufweisen kann.

In Fig. 3 ist veranschaulicht, dass das zweite Rastelement 8 eine zweite, in Umfangsrichtung 9 wellenförmige Rastkontur 15 aufweisen kann. In diesem Zusammenhang ist in Fig. 3 auch gezeigt, dass das zweite Rastelement 8 die zweite, in Umfangsrichtung 9 wellenförmige Rastkontur 15 an einer axialen Trennfläche 17 zu dem ersten Rastelement 7 aufweist. Zudem ist beispielhaft gezeigt, dass das zweite Rastelement eine beispielhafte Außenverzahnung 20 aufweisen kann.

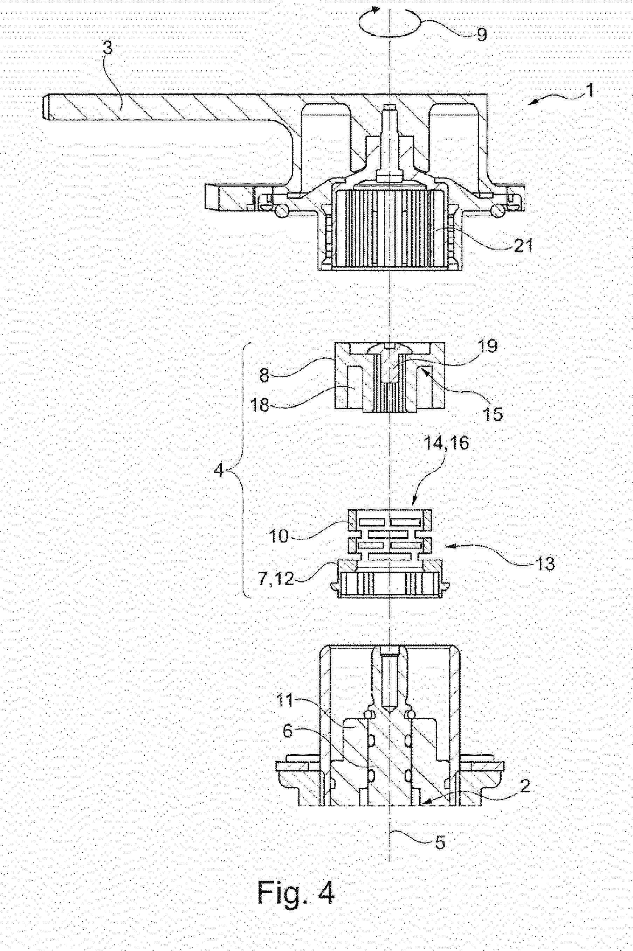

Fig. 4 zeigt beispielhaft und schematisch die Sanitärarmatur aus Fig. 1 in Explosionsdarstellung. Da die Bezugszeichen einheitlich verwendet werden, kann auf die vorhergehenden Erläuterung Bezugs genommen werden. Gemäß der Darstellung nach Fig. 4 ist weiterhin zu erkennen, dass das erste Rastelement 7 (im montierten Zustand) in einen in Umfangsrichtung 9 umlaufenden Ringspalt 18 des zweiten Rastelements 8 hinein ragen kann.

Zudem ist in Fig. 4 zu erkennen, dass und ggf. wie das erste Rastelement 7 drehfest mit einem Gehäuseelement 11 der Einstelleinrichtung 2 und das zweite Rastelement 8 drehfest mit dem Drehgriff 3 verbunden sein können. Die Federhülse 12 wird hier beispielhaft auf das Gehäuseelement 11 (welches auch als "Oberteil" des Ventils bezeichnet wird) verdrehsicher aufgesteckt. Danach kann auf eine beispielhafte Riefenverzahnung des Stellelements 6 das zweite Rastelelement 8 gesteckt werden. Das zweite Rastelement 8 ist in diesem Zusammenhang beispielhaft in der Form (und mit der Funktion) eines sogenannten Riefenadapters gebildet. Durch das Aufstecken des zweiten Rastelements 8 (bzw. Riefenadapters) und das Befestigen einer Schraube 19 kann die Federhülse 12 axial vorgespannt werden.

Durch Drehen des beispielhaft in der Form eines Hebels gebildeten Drehgriffs 3 kann das zweite Rastelement 8 (Riefenadapter) mit gedreht werden. Das zweite Rastelement 8 ist hierzu beispielhaft über die Außenverzahnung 20 (und eine dazu korrespondierende, hier nicht dargestellte Innenverzahnung) mit einem weiteren Riefenadapter 21 drehfest verbunden, der wiederum mit dem Drehgriff 3 drehfest verbunden ist. Die Kraft- bzw. Momentenübertragung von Drehgriff 3 über den Riefenadapter 21 und dann auf das Rastelement 8 könnte (alternativ) auch direkt von dem Drehgriff 3 auf das Rastelelement 8 erfolgen. Insoweit könnte auf den Riefenadapter 21 auch verzichtet werden.

Durch die wellenförmigen Rastkonturen 14, 15 wird eine stufenweise Einstellbarkeit des Durchflusses durch die Sanitärarmatur 1 ermöglicht, die zudem von einem Benutzer der Sanitärarmatur 1 haptisch und/oder akustisch wahrnehmbar ist. Dies kann auch als sogenannter "Haptic-Click-Effekt" beschrieben werden. Die hier vorteilhafte Erzielung des Haptic-Click-Effekts kann mit anderen Worten auch so beschrieben werden, dass auf dem als Federhülse 12 gebildeten ersten Rastelement 7 eine wellenartige Geometrie vorhanden ist und eine dazu passende Geometrie auf der Innenseite des (als Riefenadapter gebildeten) zweiten Rastelements 8 gebildet ist. Da die Federhülse 12 drehfest auf dem Gehäuseelement 11 (Oberteil des Ventils) fixiert ist, wird durch Drehen des Drehgriffs s (Hebels) immer wieder die wellenartige Geometrie der Federhülse 12 gedrückt bzw. axial ausgelenkt. Diese Auslenkung wird insbesondere möglich, durch die Federwirkung des integral in der Federhülse 12 gebildeten Federelements 10. Zudem kann durch das integrale Federelement 10, welches hier beispielhaft in der Art einer selbstfedernden Geometrie der Federhülse 12 gebildet ist, bewirkt werden, dass die Federhülse 12 immer wieder selbstständig in ihre Ausgangslage zurückfedern kann.

Das Rastsystem 4 trägt hier insbesondere zum Bereitstellen einer haptisch und/oder akustisch wahrnehmbaren, stufenweisen Einstellbarkeit des Durchflusses durch die Sanitärarmatur 1 bei. Somit kann in vorteilhafter Weise eine fühlbare und/oder akustische wahrnehmbare Volumenstromänderung erfolgen. Insbesondere kann eine verbesserte Volumenstromeinstellung durch ein (leichtes) fühlbares Einrasten und/oder durch eine leise akustische Signalgebung (aufgrund des Einrastens) beim Öffnen und Schließen des Ventils erreicht werden. Weiterhin kann mittels des Rastsystems 4 vorteilhaft erreicht werden, die Wassermenge bestimmt einzustellen, sodass der Volumenstrom durch die fühlbaren Rastungen insbesondere besser justiert werden kann. Zudem kann über das Rastsystem 4 in vorteilhafter Weise ein wertigeres Bediengefühl vermittelt werden.

Somit werden eine Sanitärarmatur, ein Rastsystem und eine Verwendung angegeben, welche die mit Bezug auf den Stand der Technik geschilderten Probleme zumindest teilweise lösen. Insbesondere werden eine Sanitärarmatur, ein Rastsystem und eine Verwendung angegeben, die eine bessere Justierung des Volumenstroms durch die Sanitärarmatur ermöglichen. Zudem kann dem Benutzer insbesondere ein wertigeres Bediengefühl vermittelt werden.

### Bezugszeichenliste

- 1: Sanitärarmatur
- 2: Einstelleinrichtung
- 3: Drehgriff
- 4: Rastsystem
- 5: Drehachse
- 6: Stellelement
- 7: erstes Rastelement
- 8: zweites Rastelement
- 9: Umfangsrichtung
- 10: Federelement
- 11: Gehäuseelement
- 12: Federhülse
- 13: Hülsenkörper
- 14: erste Rastkontur
- 15: zweite Rastkontur
- 16: Stirnfläche
- 17: Trennfläche
- 18: Ringspalt
- 19: Schraube
- 20: Außenverzahnung
- 21: Riefenadapter

## Patentansprüche

1. Sanitärarmatur (1) mit einer Einstelleinrichtung (2) zur Einstellung eines Durchflusses durch die Sanitärarmatur (1), einem Drehgriff (3) zur manuellen Vorgabe des Durchflusses und einem Rastsystem (4), wobei die Einstelleinrichtung (2) ein um eine Drehachse (5) drehbares Stellelement (6) umfasst, das drehfest mit dem Drehgriff (3) verbunden ist, wobei das Rastsystem (4) ein erstes Rastelement (7) und ein dazu korrespondierendes zweites Rastelement (8) umfasst, die derart zusammenwirken, dass der Drehgriff (3) während einer Drehung in einer Umfangsrichtung (9) um die Drehachse (5) und während einer Drehung entgegen der Umfangsrichtung (9) um die Drehachse (5) jeweils in einer Vielzahl von definierten Drehstellungen einrasten kann, und wobei zumindest in oder an dem ersten Rastelement (7) oder dem zweite Rastelement (8) ein Federelement (10) zum Bewirken einer in Bezug auf die Drehachse (5) axialen Anpresskraft zwischen den Rastelementen (7, 8) integral gebildet ist.

2. Sanitärarmatur (1) nach Anspruch 1, wobei die Rastelemente (7, 8) derart zusammenwirken, dass der Drehgriff (3) während einer maximalen Öffnungsdrehung und während einer maximalen Schließdrehung jeweils in mindestens drei definierten Drehstellungen einrasten kann.

3. Sanitärarmatur (1) nach Anspruch 1 oder 2, wobei das erste Rastelement (7) drehfest mit einem Gehäuseelement (11) der Einstelleinrichtung (2) verbunden ist und das zweite Rastelement (8) drehfest mit dem Drehgriff (3) verbunden ist.

4. Sanitärarmatur (1) nach einem der vorhergehenden Ansprüche, wobei das erste Rastelement (7) mit einer Federhülse (12) gebildet ist, die einen Hülsenkörper (13) aufweist, in oder an dem das Federelement (10) integral gebildet ist.

5. Sanitärarmatur (1) nach einem der vorhergehenden Ansprüche, wobei zumindest das erste Rastelement (7) eine erste, in Umfangsrichtung (9) wellenförmige Rastkontur (14) oder das zweite Rastelement (8) eine zweite, in Umfangsrichtung (9) wellenförmige Rastkontur (15) aufweist.

6. Sanitärarmatur (1) nach Anspruch 5, soweit sich dieser auf den Anspruch 4 rückbezieht, wobei das erste Rastelement (7) die erste, in Umfangsrichtung (9) wellenförmige Rastkontur (14) an einer hin zu dem zweiten Rastelement (8) weisenden Stirnfläche (16) des Hülsenkörpers (13) aufweist.

7. Sanitärarmatur (1) nach Anspruch 5 oder 6, wobei das zweite Rastelement (8) die zweite, in Umfangsrichtung (9) wellenförmige Rastkontur (15) an einer axialen Trennfläche (17) zu dem ersten Rastelement (7) aufweist.

8. Sanitärarmatur (1) nach einem der vorhergehenden Ansprüche, wobei das erste Rastelement (7) in einen in Umfangsrichtung (9) umlaufenden Ringspalt (18) des zweiten Rastelements (8) hineinragt.

9. Verwendung einer Sanitärarmatur (1) nach Anspruch 1 zum Bereitstellen einer zumindest haptisch oder akustisch wahrnehmbaren, stufenweisen Einstellbarkeit des Durchflusses durch die Sanitärarmatur (1).

## Claims

1. A sanitary fitting (1) with an adjusting device (2) for adjusting a flow rate through the sanitary fitting (1), a rotary handle (3) for manually presetting the flow rate, and a latching system (4), wherein the adjusting device (2) comprises an adjusting element (6) which is rotatable about an axis of rotation (5) and is connected to the rotary handle in a rotationally fixed manner (3), wherein the latching system (4) comprises a first latching element (7) and a second latching element (8) corresponding thereto, which interact in such a manner that during a rotation in a circumferential direction (9) about the axis of rotation (5) and during a rotation counter to the circumferential direction (9) about the axis of rotation (5), the rotary handle (3) can latch in place in a plurality of defined rotational positions in each case, and wherein a spring element (10) is integrally formed at least in or on the first latching element (7) or the second latching element (8) for effecting a contact pressure between the latching elements (7, 8) acting axially with respect to the axis of rotation (5).

2. The sanitary fitting (1) according to claim 1, wherein the latching elements (7, 8) interact in such a manner that during a maximum opening rotation and during a maximum closing rotation, the rotary handle (3) can latch in place in at least three defined rotary positions in each case.

3. The sanitary fitting (1) according to claim 1 or 2, wherein the first latching element (7) is connected to a housing element (11) of the adjusting device (2) in a rotationally fixed manner and the second latching element (8) is connected to the rotary handle (3) in a rotationally fixed manner.

4. The sanitary fitting (1) according to any one of the preceding claims, wherein the first latching element (7) is formed with a spring sleeve (12) having a sleeve body (13) in or on which the spring element (10) is integrally formed.

5. The sanitary fitting (1) according to any one of the preceding claims, wherein at least the first latching element (7) has a first latching contour (14) that is wave-shaped in the circumferential direction (9), or the second latching element (8) has a second latching contour (15) that is wave-shaped in the circumferential direction (9).

6. The sanitary fitting (1) according to claim 5 when related to claim 4, wherein the first latching element (7) has the first latching contour (14), which is wave-shaped in the circumferential direction (9), on an end face (16) of the sleeve body (13) facing towards the second latching element (8).

7. The sanitary fitting (1) according to claim 5 or 6, wherein the second latching element (8) has the second latching contour (15), which is wave-shaped in the circumferential direction (9), on an axial separating surface (17) facing the first latching element (7).

8. The sanitary fitting (1) according to any one of the preceding claims, wherein the first latching element (7) projects into an annular gap (18) of the second latching element (8), which annular gap extends in the circumferential direction (9).

9. Use of a sanitary fitting (1) according to claim 1 for providing an at least haptically or acoustically perceptible, incremental adjustability of the flow through the sanitary fitting (1).

## Revendications

1. Robinetterie sanitaire (1), pourvue d'un dispositif de réglage (2) destiné à régler un débit à travers la robinetterie sanitaire (1), d'une poignée rotative (3) destinée à prédéfinir manuellement le débit et d'un système d'enclenchement (4), le dispositif de réglage (2) comprenant un élément d'actionnement (6) rotatif autour d'un axe de rotation (5), qui est relié de manière solidaire en rotation avec la poignée rotative (3), le système d'enclenchement (4) comprenant un premier élément d'enclenchement (7) et un deuxième élément d'enclenchement (8) correspondant avec celui-ci, qui coopèrent de telle sorte que pendant une rotation dans une direction périphérique (9) autour de l'axe de rotation (5) et pendant une rotation à l'encontre de la direction périphérique (9) autour de l'axe de rotation (5), la poignée rotative (3) puisse s'enclencher respectivement dans une pluralité de positions en rotation définies et au moins dans ou sur le premier élément d'enclenchement (7) ou le deuxième élément d'enclenchement (8) étant conçu intégralement un élément à ressort (10), destiné à provoquer une force d'appui axiale par rapport à l'axe de rotation (5) entre les éléments d'enclenchement (7, 8).

2. Robinetterie sanitaire (1) selon la revendication 1, les éléments d'enclenchement (7, 8) coopérant de telle sorte que pendant une rotation en ouverture maximale et pendant une rotation en fermeture maximale, la poignée rotative (3) puisse s'enclencher respectivement dans au moins trois positions en rotation définies.

3. Robinetterie sanitaire (1) selon la revendication 1 ou 2, le premier élément d'enclenchement (7) étant relié de manière solidaire en rotation avec un élément de boîtier (11) du dispositif de réglage (2) et le deuxième élément d'enclenchement (8) étant relié de manière solidaire en rotation avec la poignée rotative (3) .

4. Robinetterie sanitaire (1) selon l'une quelconque des revendications précédentes, le premier élément d'enclenchement (7) étant constitué avec une douille à ressort (12) qui comporte un corps de douille (13) dans ou sur lequel l'élément à ressort (10) est intégralement conçu.

5. Robinetterie sanitaire (1) selon l'une quelconque des revendications précédentes, au moins le premier élément d'enclenchement (7) présentant un premier contour d'enclenchement (14), de forme ondulée en direction périphérique (9) ou le deuxième élément d'enclenchement (8) présentant un deuxième contour d'enclenchement (15), de forme ondulée en direction périphérique (9).

6. Robinetterie sanitaire (1) selon la revendication 5, dans la mesure où elle se réfère à la revendication 4, le premier élément d'enclenchement (7) comportant le premier contour d'enclenchement (14) de forme ondulée en direction périphérique (9) sur une face frontale (16) du corps de douille (13) dirigée vers le deuxième élément d'enclenchement (8).

7. Robinetterie sanitaire (1) selon la revendication 5 ou 6, le deuxième élément d'enclenchement (8) comportant le deuxième contour d'enclenchement (15) de forme ondulée en direction périphérique (9) sur une surface de séparation (17) axiale vers le premier élément d'enclenchement (7).

8. Robinetterie sanitaire (1) selon l'une quelconque des revendications précédentes, le premier élément d'enclenchement (7) saillant dans une fente annulaire (18) circonférentielle dans la direction périphérique (9) du deuxième élément d'enclenchement (8).

9. Utilisation d'une robinetterie sanitaire (1) selon la revendication 1, pour mettre à disposition une aptitude au réglage graduelle, perceptible au moins de manière haptique ou acoustique du débit à travers la robinetterie sanitaire (1).
